# EUROPEAN PATENT SPECIFICATION

(11) **EP 1 813 221 B1**
(45) Date of publication and mention of the grant of the patent: **19.08.2009**
(21) Application number: 04791397.5
(22) Date of filing: 29.10.2004
(51) Int. Cl.: A61C 7/28

(54) **SELF-LIGATING BRACKET COMPRISING LATERAL SLIDERS**
SELBSTLIGIERENDES BRACKET MIT SEITLICHEN SCHIEBERN
BRACKET À AUTO-LIGATURAGE AVEC DES PATTES LATERALES

(43) Date of publication of application: 01.08.2007
(73) Proprietor: Euroortodoncia, S.L., 28923 Alcorcon, Madrid (ES)
(72) Inventor: CERVERA SABATER, Alberto, E-28923 Alcorcon, Madrid (ES)
(74) Representative: Urizar Anasagasti, José Antonio
(86) International application number: PCT/ES2004/000478
(87) International publication number: WO 2006/048472

(56) References cited:
- US-A- 6 071 119
- US-A1- 2004 072 119
- US-A1- 2004 166 458

## Description

### FIELD OF INVENTION

This invention is related to the improvement of the characteristics of the self-ligating brackets, that is, orthodontic brackets that are composed of closure means for the arch ligating as an integral part of the same.

### BACKGROUND OF THE INVENTION

In orthodontic procedures a variety of brackets that are joined, almost always by cementation to their corresponding tooth, are generally used.
The said brackets include a groove in the mesial-distal direction wherein a metallic arch is introduced, being called this way because it is pre-shaped with an arch form which corresponds to the optimal form of aligning meant for one's teeth at the end of the orthodontic procedure. Naturally, the arch has to be fastened or joined to the bracket in a way that it generates the desired forces on the tooth. The first means of joining used were through metallic wires that were twisted around the bracket and arch, but this produced lesions in the mouth due to the grazing of the said wires with the soft-tissue of the mouth that resulted in non-desired ulcerations or sores, which then subsequently gave way to the development of ligatures or attachments of elastic material that lightened the mentioned non-desired effects, and moreover, several types of brackets called self-ligating brackets were developed, which have a locking/shutting means, that is part the bracket itself, that fastens to the arch inside the groove.

In the last few years, different patents that have distinct types of self-ligating have been published; the main difference between one and the others is the kind of closure proposed, with which a more efficient ligating of bracket and arch is the objective. The patent US5586882 (Hanson G. Herbert) published in 1996 presents a self-ligating bracket that is composed of a ligature-spring device in a U-shape whose converging arms can be moved in the body of the bracket between the open and closed/ positions; in the closed position, the spring retains the arch inside the groove and keeps the arch and the bracket in a relative excellent position. The ligating organ is made of a super elastic metal alloy that has a thickness that varies between 0,20 and 0,25 mm with rounded edges. At least the lingual portion of the closure element has to be harder than the rest, since the pressure that the arch produces on the lock as much as the fact of having to move said locking/shutting in occlusal gingival direction, to open and close the groove, can produce an undesired deformation in the closure element and, as a consequence of said deformation, the relative position between the bracket and the arch would cease to be optimal.
In 1998, Hanson g. Herbert himself published the patent US5711666 in which the brackets' body has a groove in mesial distal direction and a joining-spring device to lock or shut the arch in the mentioned groove. The ligating organ has a thin and narrow shaped plate and is composed basically of an anchor or bind on one of its ends, of a pre-shaped arch-formed piece which bends in the centre and, of a clasp on the other end. The anchor hooks onto several slots of the brackets body and pivots in its distal mesial axis in a such a way that when the other end or clasp is hooked on grooves of the brackets' body, the front section bends and acquires a smaller arch producing with it enough hooking strength to hold the arch inside the groove. The hook-up is produced by the simple pressure of the fingers on the ligature element, while the unhooking is produced with the insertion of a tool in a slot in the brackets' body that pushes the clasp downwards until it makes it come out. The strength that the ligature element transfers to the arch can be adjusted to different pre-loading magnitudes giving a greater or lesser angle or curvature radius in the manufacture of the mentioned ligature element. Although stainless steel is used to make the ligature element, when the said ligature element is subject to the necessary strength or force to produce the hook-up, at the fold of the ligature element, the mentioned steel is close to its limit of elasticity, and if the elasticity is lost due to exceeding the said limit of elasticity, the whole bracket must be changed since replacing the ligature element is a delicate operation. To make this, a nickel-titanium alloy of 50% that has better elastic characteristics and similar characteristics against corrosion to that of series 300 stainless steel is used.

Continuing this line of improving the characteristics of self-ligating, Dwight H.Damon describes in patent US6071118 published in the year 2000 A self-ligating bracket that can be manufactured in any type of material, as long as this is appropriate, such as metal, plastic or ceramic. Preferably, metal is used to obtain, by moulding, a mechanical structure that is able to produce the hooking of the arch during an orthodontic process. The bracket is composed of a platform and a body that can be integrally made or assembled. The body has several bulges that protrude like flanges that allow the placing of ligatures or elastomer rings. The groove stretches along the whole width of the bracket with lingual, occlusal, gingival walls leaving the labial side for the insertion of the arch. The lower ligature flange make up several guides/tracks facing each other through which a cap can be fitted onto, which is inserted and slides in a way that the said cap has a relative movement with respect to the bracket only along the guides, being able to move between two positions: in open, in which the groove is accessible to insert or get the arch, and in closed, in which the arch holds firm in the groove, The cap has a front surface and a back surface, the front having protruding bulges to limit the opening movement, and the back having a bulge to hook onto a notch in the brackets' body to keep the cap in a closed position. To go from an open position to a closed one or, vice versa, you have to bend the cap lightly so that way, there is no retention of the notch, which is what can make it lose the adjustment therefore produces an unwanted looseness.

Another patent like the US6071119 of Christoff and others published in the year 2002 proposes a type of bracket in which the self-ligating cap can be set in three different positions, so that the mentioned bracket gives three possible functions. The open position is similar to the former brackets and is used to insert or get the arch, the closed position for the passive treatment in orthodontics wherein the arch is locked-in inside the groove but the cap does not place any force or pressure on the arch, and the closed position for the active orthodontic treatment wherein the arch is also locked-in inside the groove, but in this case, the cap does place force or pressure on the arch. In the said patent, different executions with the different locking/closing methods used in the earlier mentioned patents are shown, such that no progress with respect to the problem of deformation of the cap when it is moved to leave the groove open or closed is made.

To reach this objective of not generating such deformations and consequently, looseness in the cap, the actual invention claims a bracket in which the self-ligating system is produced by combining the advantages of U-shaped clip system and the guided rigid closure systems.

### DESCRIPTION OF THE INVENTION

The self-ligating bracket with lateral sliders for orthodontic treatment is composed of two assembled pieces; the first, called body, contains the basic devices of any bracket, such as the fastening or cementing to the tooth means, the archs' groove in the mesial-distal direction, flanges for conventional wire or elastomers ligatures and, lastly, grooves that are built laterally to serve as guides or tracks over which sliders, that the second piece of the bracket have, slide, the so-called closure, which is basically composed of the closing cap, body of the closure, and the said lateral sliders. There are two possibilities once the two pieces are assembled: first, that both parts stay joined/connected so that a retention bar that impedes the dismantling of the sliders base is always welded on, which would ensure the useful space for the arch, defined by the groove and the closing cap, to be constant; the second, is to leave the sliders base free so that there is the possibility to dismantle the body with respect to the closure element, which allows to change the closure element during an orthodontic treatment, that way changing the cap. The first case is used for the passive orthodontic treatments and the second case is to apply in active orthodontic treatments. Once the two pieces of the bracket are assembled, its function is such that when the groove is shut, displacing the closure element in an occlusal direction, the mentioned closing device and mentioned body stay stuck therefore impeding the displacement of the orthodontic arch.
To create the opening of the groove, an instrument that places pressure on a particular point of the sliders or the closure bar is used. The pressure produces a small elastic deformation that allows to displace the sliders on the guides and, by the geometry of the longitudinal section of the mentioned sliders, that have a long polygon shape showing two slightly wedged areas in the gingival and occlusal ends of the mentioned longitudinal section, go over the inclined plane of a retention clip in a wedge shape formed in the body, until a notch located in the upper part of the sliders gets stuck in the mentioned retention clip.

The advantages that this model has over others that have preceded it are several:
- the fastening of the arch is by means of a rigid cap that through its own geometry has a greater tendency to close the greater the pressure that the arch produces on the cap is, because of the wedge shape of the sliders a pressure on the cap creates the displacing effect towards the bottom of the sliders or, towards the locking/shutting position, which is actually the same.
- easy opening that is produced by placing pressure on the base of the sliders with an instrument;
- a two piece system of the same material which besides simplifying the manufacture, avoids the electrical corrosion that is produced in models composed of different metals; and
- guided sliders or with tracks in the sides of the body, which allows an external way to follow the tooth direction.

On the other hand, it maintains the conventional characteristics of other brackets such as: design of flanges for the conventional ligature that close the opening system in a way that, in case of a flaw, the replacement of the bracket is not needed; the possibility to use chain stitches or devices that drive the bracket laterally; rounded external surfaces to avoid hurting the mucous membranes. The cementing surface of the tooth have horizontal slots provided for drilling, laser or electrochemical procedures.

In summary, the most important characteristic of the self-ligating bracket with lateral sliders is that the closure element is of the spring type in U-shape but with the advantage of its high rigidity and its low deformation because, besides having much more mass than the conventional springs, it is guided by several lateral sliders that are designed to protect a clip from being stuck or hooked without producing deformation, and the closure or lock is not just a simple cap but a whole piece. This is very important since even though the preferred manufacturing material is that of stainless steel duplex (SAF 2205) or of plastic, it is totally feasible to manufacture it by other means (injection, filtered/refined, synterization) of metals, thermoplastic materials or porcelain including the cap, which is not feasible in previous models because of the reduced dimensions of these types of brackets in preceding models.

### BRIEF DESCRIPTION OF DRAWINGS

The actual invention as claimed in claim 1 will be completely understood from the detailed description which will be given in subsequent sections with the help of the following figures that are presented only as a form of illustration and are not limitative of the actual invention.
Fig.1 is a perspective view of the bracket of the actual invention, in which the cap of the closure element is in the open position.
Fig.2 is a perspective view of the invention of the bracket wherein the cap of the closure element is in the closed position.
Fig.3 is a perspective view of the body of the invention of the bracket.
Fig.4 is a perspective view of the closing device of the invention of the bracket.
Fig.5 is a similar view to that of Fig.4, which includes the retention bar or stick that, if placed, impedes the dismantling of the body and the closure element.
Fig.6 schematically shows the movement of the closure element when it goes from a closed to an open position.
Fig.7 shows a front view of the invention of the bracket in a closed position.

### PREFERRED EMBODIMENT OF THE INVENTION

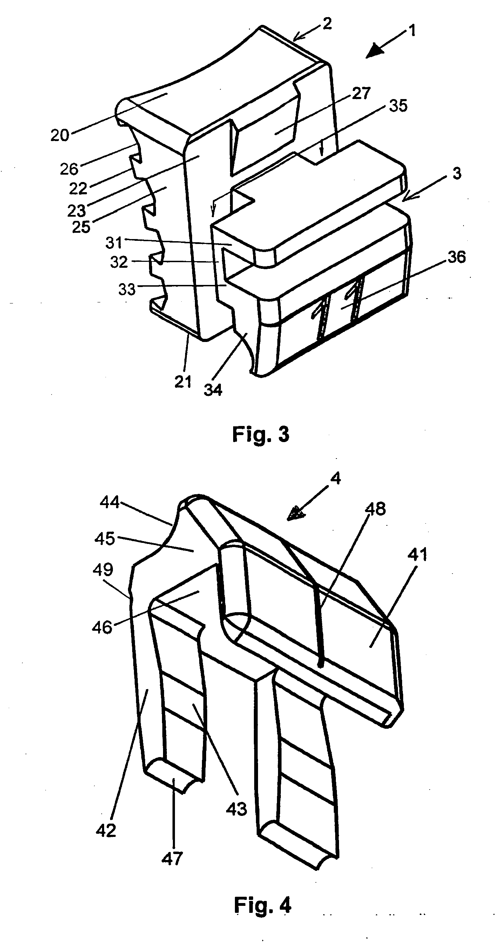

In a preferred embodiment, the invention of the self-ligating bracket with lateral sliders is composed of two parts made by cold machining of a stainless steel block duplex(SAF 2205), which is provided with or given several mechanical properties and corrosion resistance superior to those obtained by other steel or other manufacturing systems. It is also possible to make it by other alloy, thermoplastic material, or porcelain processes, which are being done more frequently for aesthetic reasons. The mentioned two parts that make up the bracket can be seen in Figs. 3 and 4 and are, the body(1) and the closure element(4) respectively.
The body(1) of the bracket is made up of solely one machined part, in which one can differentiate two parts, the platform(2) and the grooved body (3). The platform is the part in which the bracket is cemented to the tooth and on this we can differentiate a gingival surface (20) that is flat, a occlusal surface(21) which is also flat, a dental surface(22) with a surface adapted to the tooth and on which the cemented slots(26) are found, a mesial surface(25) and other distal surface which is the same and symmetrical to the mesial surface(25) with respect to a sagittal plane, which because it is hidden, is not referred to in Fig.3, and lastly, a labial surface(23) which is principally flat and wherein the retention clip (27) protrudes in a wedge shape and the grooved body (3).

The grooved body (3) overtops from the labial surface(23) of the body(1) in a dental-labial direction and is composed of three walls, a dental wall(32), a gingival wall(31), and an occlusal wall(33) that at the same time extends to an occlusal direction to form an occlusal flange for conventional ligatures(34). The dental wall(32) is T-shaped and is joined by its midsection to the said labial surface(23) of the body(1) leaving free a pair of guides(35) between them that extend in a gingival-occlusal direction on the sides of the labial surface(23). The archs' groove(37) generally has a rectangular shape but its shape can change depending on the type of problem to be corrected by the orthodontic treatment and is defined by the occlusal surface of the gingival wall(31), by the labial surface of the dental wall(32), and by the gingival surface of the occlusal wall(33).

The union of the surfaces that constitute external edges of the bracket's body are completely rounded so as to diminish the possibility of ulcerations in the oral membranes. In the labial surface of the occlusal flange for the conventional binds(34) an ID data number(36) is marked by laser which is used to identify the position the tooth occupies in the mouth in accordance to a code used by the International Dental Federation, which is visible to the clinic and can avoid placing a bracket on a tooth that does not correspond to the adequate one.

The closure element(4) is U-shaped with one of its sides being shorter than the other and has an opening on the longer side that occupies approximately a third of the total width. The base of the U is what is called the body of the closure element(45), from which the closing cap extends (41) on one side, and the sliders (42) on the other. The body of the closure element(45) is composed of the closing buffer (46) in its' base which is a flat surface on its occlusal side and, the gingival flange for conventional ligatures(44) in its gingival side, and has a hooking notch(49) all along its dental surface. The sliders (42) have a long polygonal shape in longitudinal section that present two slightly wedged areas on the gingival and occlusal ends of the said longitudinal section with a flat part situated in its center, called sliding surface(43), and a joining notch(47) at the end opposite of the closure elements body(45). The joining notch(47) will serve to incorporate the retention bar or stick(50) in the execution variant of passive orthodontics once the body(1) and the closure element (4) have been assembled. The closing cap(41) has a vertical mark branded by laser or a position indicator(48) placed in the same direction as the tooth's axis, which facilitates the positioning of the bracket in the moment of cementation to the clinic.

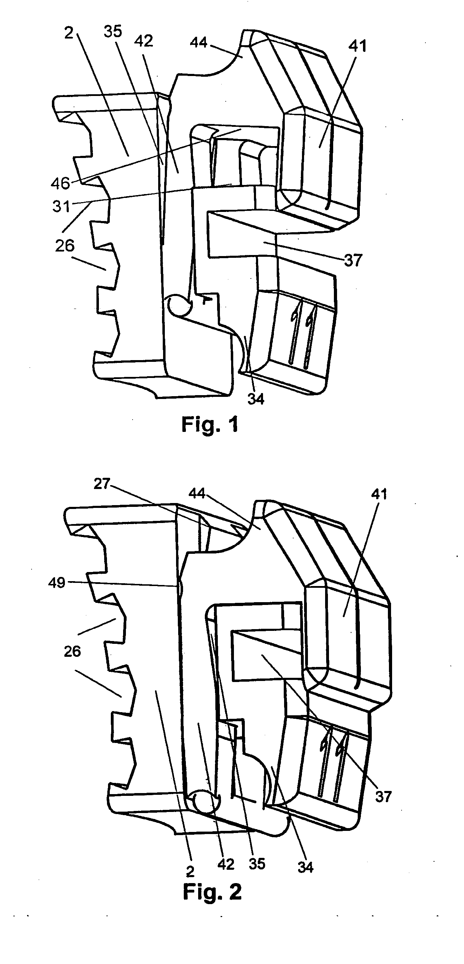

Fig.1 shows the invention of the bracket with its' body(1) and the closure element(4) with the retention bar(50) already assembled, which would make it impossible to dismantle both parts again, that way, said bracket would be used in a passive orthodontic treatment. The open position is what is shown leaving the archs groove (37) free to insert or extract the metallic orthodontic arch from the mentioned groove(37). The relative position of the body(1) and of the closure element is totally stable since the retention clip(27) is inserted in the hooking notch(49).

Fig.2 shows the same bracket as in Fig.1 in the locked position. For this, it is enough to press the closing cap(4) in the occlusal direction, which is what restrains the hooking strength between the retention clip(27) and the hooking notch(49) which produces a sliding of the sliders (42) on the guides(35) until the closure element's(4) closing buffer (46) hits the gingival wall(31) of the body of the groove(3), which would drive in the bracket in this position because of the wedge shape of the sliders (42) that are set in the guides(35).

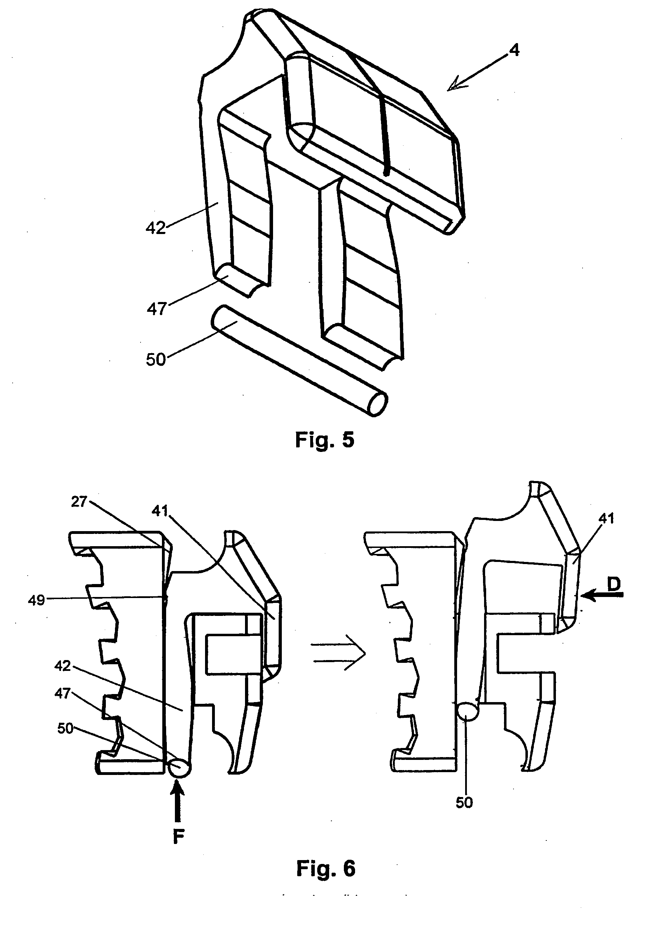

Fig.6 shows the mechanism to go from the locked/closed position to the open position, which is problematic in previous designs because of the looseness that the cap ends up having as a result of it being thin and having only one layer. In this Fig.6 it shows, that exerting force in the direction of arrow F, would not only displace the closing cap(41) but also the whole closure element(4), which has no deformation whatsoever in its displacement that ends when the retention clip(27) is inserted in the hooking notch(49). Moreover, because of the geometry of the closure element(4), the more the latter is displaced toward the open position, the closing cap tends to move in the direction indicated by arrow D, or in othber words to the opposite way of the movement of other brackets whose movement guide is designed so that the closure is concealed inside the brackets' body itself.

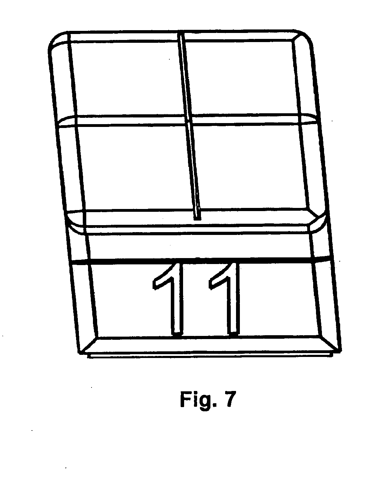

In Fig.7 one can note that the shape of the bracket is not rectangular, instead, the sides have the same inclination of the tooth, as it can be seen, because they are parallel to position mark line(48).

Although in the model described earlier the configuration of the cap is designed so that it is opened in the gingival direction, the body can also be configured(1) such that the cap is opened in the occlusal direction, which has the advantage of the caps' closure will occur by chewing. Therefore, the making of the body(1) is such that it keeps the dental(22), gingival(20), occlusal(21), mesial(25) and distal surfaces(no referenced) identical, but it establishes the labial surface(23) turned 180° with respect to a perpendicular axis to said surface and where the body of the groove(3) is turned at 180° with respect to a perpendicular axis to said surface. In this case the number of the tooth is marked or recorded on the cap and the tooth's axis on the body.
It is clear that this invention as described can be varied in different ways. These changes must not be seen as a deviation in the field of the invention, and all the amendments such as the ones that would be obvious to those skilled in the art it is understood that they will be included in the field of the following claims.

## Claims

1. A self-ligating bracket with a body (1) and a closure element (4),
the body (1) comprising a platform(2) and a grooved body (3), said platform (2) having
- a dental surface (22) with a round shape to adapt itself to the tooth, said dental surface having cementing slots (26) to facilitate the cementing of the body on the tooth,
- a mesial surface(25), a distal surface, a gingival surface (20) and an occlusal surface (21), all of them being flat and with rounded edges at their joints or unions, and a labial surface(23), mostly flat, with a wedge-shaped retention clip (27) protruding from said labial surface, said grooved body (3), comprising an arch groove (37) for containing an arch, having
- a dental wall(32), joined in its central portion to said mentioned labial surface(23) of the platform (2) of the body (1) thereby leaving a pair of guides (35) free between the dental wall (32) and the labial surface(6/30-32), said guides stretch along the sides of the labial surface(23) in a gingival-occlusal direction,
- a gingival wall(31),
- an occlusal wall (33) that extends in the occlusal direction in the form of a flange (34) for conventional ligatures,
and the closure element (4) being composed of
- a body (45) having a flat surface on its occlusal side which forms a closing buffer (46), and a gingival flange on its gingival side for conventional ligatures (44), said body (45) of the closure element (4) including a hooking notch (49) on its dental side,
- a locking cap (41) which extends from the labial surface of said body (45) of the closure element (4), and
- several sliders (42) whose longitudinal section has a long polygonal shape with two slightly wedged areas at the gingival and occlusal ends of said longitudinal section, a sliding surface (43) between the two wedged areas, said sliders being joined to said body of the closure element at their gingival end and having a joining notch (47) at their occlusal end,
whereby the assembly of the body (1) with the closure element (4) is achieved by placing the sliders of the closure element (4) in said guides (35) of the bracket body (1) in a gingival-occlusal direction.

2. A Self-ligating Bracket in accordance with Claim 1, wherein once the body (1) and the closure element (4) have been assembled, and before cementing the bracket to the patient's tooth, a retention bar (50) can be joined to the joining notch (47) of the sliders (42) of said closure element (4), to impede the separation of said closure element (4) from said body (1).

## Patentansprüche

1. Sebsthaftende Zahnklammer mit einem Körper (1) und einem Verschlusselement (4), der Körper (1) bestehend aus einer Plattform (2) und einem gerillten Körper (3), wobei besagte Plattform (2)
- eine dentale Oberfläche (22) mit runder Form hat, um sich an den Zahn anzupassen, wobei besagte zahnseitige Oberfläche Nuten (26) für den Klebstoff aufweist, um das ankleben des Körpers an den Zahn zu ermöglichen,
- eine mesiale Oberfläche (25), eine distale Oberfläche, eine gingivale Oberfläche (20), und eine okklusale Oberfläche (21) hat, wobei all diese flach und mit abgerundeten Kanten an ihren Verbindungen oder Anschlüssen verstehen sind, und eine größtenteils flache labiale Oberfläche (23) mit einer keilförmigen Halteklammer (27) hat, welche aus besagter labialen Oberfläche hervorragt, wobei besagter gerillter Körper (3) eine bogenförmige Rille beinhaltet, um einen Bogen aufzunehmen, wobei er eine dentale Wand (32) hat, die in ihrer mittigen Zone zu besagter labialen Oberfläche (23) der Plattform (2) des Körpers (1) verbunden ist, und so ein paar Führungen (35) zwischen der dentalen Wand (32) und der labialen Oberfäche(6/30-32) freilässt, besagte Führungen sich enlang den Seiten der labialen Oberfläche (23) in gingivaleokklusale Richtung erstrecken,
- eine gingivale Wand (31)
- ene okklusale Wand (33) die sich in okklusaler Richtung in Form einer Randwulst (34) fur konventionelle Ligaturen erstreckt, wobei das Verschlusselement (4) aus einem Körper (45), der in seiner okklusalen Seite eine flache Oberfläche aufweist, die ein Verschlussstöpsel (46) formt, und einer gingivalen Wulst seiner gingivalen Seite für konventionelle Verbindungen (44) besteht, wobei besagter Körper (45) des Verschlusselementes (4) eine Einrastungskerbe (49) auf seiner dentalen Seite aufweist.
- eine Schließkappe (41) welche sich von der labialen Oberfläche aus besagten Körpers (41) des Verschlusselementes (4) erstreckt, und
- mehrere Gleiter (42) deren Längstschnitt eine lange polygonale Form hat mit zwei leicht schiefen Zonen in den gingivalen und okklusalen Enden dieses Längstschnittes, eine gleitende Oberfläche (43) wischen den zwei schiefen Zonen, wobei besagte Gleiter mit besagtem Körper des Verschlusselements in ihrem gingivalen Ende verbunden sind, und eine Verbindungskerbe (47) in ihren okklusalen Ende haben,
wobei der Zusammenbau des Körpers (1) mit dem Verschlusselement durch Plazierung der Gleiter des Verschlusselementes (4) in besagten Führungen (35) des Klammerkörpers (1) in gingivalokklusaler Ruchtung erreicht wird.

2. Selbsthaftende Zahnklammer nach Anspruch 1, an der, Körper (1) und Verschlusselement einmal zusammenmontiert (4) und noch bevor diese an den zahn des Patienten zementiert wird, ein Draht (50) an der Verbindungskerbe (47) der Gleiter (42) von besagtem Element (4) angeschlossen werden kann, um die Trennung besagten Verschlusselementes (4) von besagtem Körper (1) zu verhindern.

## Revendications

1. Un crochet auto fixatif avec un corps (1) et un élément de fermeture (4), Le corps (1) comprenant une plate-forme (2) et un corps avec des rainures (3), la dite plate-forme (2) comportant
- une surface dentale (22) avec une forme ronde afin de s'adapter au dent, la dite surface dentale ayant des rainures pour le ciment (26) pour faciliter la cimentation du corps au dent,
- une surface médiale (25), une surface distale, une surface gingivale (20) et une surface occlusive (21) toutes lesquels sont plates et avec les bords ronds au point de leurs joints ou unions, et une surface labiale (23), principalement plate, avec une pince de rétention en forme de coin (27) que ressort de la dite surface labiale, le dit corps avec des rainures (3) comprenant une rainure arquée (37) pour contenir un arc, ayant
- une paroi dentale (32), jointe par sa portion centrale à la dite surface labiale (23) de la plate-forme (2) du corps (1) laissant de cette façon, une paire des guides (35) libres entre la paroi dentale (32) et la surface labiale (6/30-32), les dits guides s'allongent au long des côtés de la surface labiale (23) en direction gingivale occlusive,
- une paroi gingivale (31),
- une paroi occlusive (33) que s'étend en direction occlusive en forme de bourrelet (34) pour des ligatures conventionnelles, et l'élément de fermeture (4) étant composé de
- un corps (45) ayant une surface plate dans son côté occlusif que forme un tampon de fermeture (46), et un bourrelet gingival dans son côté gingival pour des ligatures conventionnelles (44), le dit corps (45) de l'élément de fermeture (4) comprenant un cran d'accrochement (49) dans son côté dental,
- un couvercle de verrouillage (41) que s'étend a partir de la surface labiale du dit corps (45) de l'élément de fermeture (4) et
- plusieurs glisseurs (42) dont la section longitudinale a une forme longue polygonale avec deux régions légèrement coincées dans les extrémités gingivale et occlusive de la dite section longitudinale, une surface glissant (43) entre les deux régions coincées, les dits glisseurs étant joints au dit corps de l'élément de fermeture à leur extrémité gingivale et ayant un cran d'union (47) à leur extrémité occlusive, En conséquence, l'assemblage du corps (1) avec l'élément de fermeture (4) est accompli au moyen de la colocation des glisseurs de l'élément de fermeture (4) dans les dits guides (35) du corps (1) du crochet en direction gingival occlusive.

2. Un crochet auto fixatif selon la Revendication 1, dans lequel, une fois que le corps (1) et l'élément de fermeture (4) ont été assemblés et avant de cimenter le crochet aux dents du patient, une barre de arrêt (50) peut être jointe au cran d'union (47) des glisseurs (42) du dit élément de fermeture (4) du dit corps (1) pour empêcher la séparation de dite élément de fermeture (4) du dite corps (1).
